# EUROPÄISCHE PATENTANMELDUNG

(11) **EP 4 621 385 A1**
(43) Veröffentlichungstag der Anmeldung: **24.09.2025**
(21) Anmeldenummer: 24164500.1
(22) Anmeldetag: 19.03.2024
(51) Int. Cl.: G01N 21/27, G01J 1/44, G01N 21/84

(54) **VORRICHTUNG ZUR OPTISCHEN BESTIMMUNG EINER STOFFKONZENTRATION EINES FLUIDS**

(71) Anmelder: optek-Danulat GmbH, 45356 Essen (DE)
(72) Erfinder: PLATTE, Daniel, 45356 Essen (DE); JAKOBY, Mark, 45356 Essen (DE); ZEISE, Bernhard, 45356 Essen (DE); FELTGEN, Martin, 45356 Essen (DE)
(74) Vertreter: Schneider, Sascha

(57) **Zusammenfassung**

Vorgeschlagen wird eine Vorrichtung und ein Verfahren zur optischen Bestimmung einer Stoffkonzentration eines Fluids, aufweisend einen Messverstärker zur Verstärkung von gemessenen Fotoströmen, wobei der Messverstärker mindestens einen linearen Transimpedanzverstärker zur Erfassung und Verstärkung der Fotoströme aufweist.

## Beschreibung

Die Erfindung betrifft eine Vorrichtung und ein Verfahren gemäß den nebengeordneten Patentansprüchen.

In der Prozessindustrie, insbesondere in der Biotechnologie, werden optische Messungen, z.B. IR(Infrarot)-Absorptions- oder Trübungsmessungen, zur Qualitätssicherung und zur Steuerung oder Regelung von Prozessen eingesetzt. Solche Messungen beruhen häufig auf der Schwächung eines Lichtstrahles durch Wechselwirkung mit einem Fluid, (Absorption, Streuung), in einigen Fällen auch auf der Erhöhung der detektierten Intensität (Streuung, Fluoreszenz, Änderung des Polarisationszustandes, Änderung der Ausbreitungsgeschwindigkeit).

Druckschrift DE 10 2013 111 696 A1 offenbart ein Messgerät für die Durchflussmessung eines Fluids in einer Rohrleitung. Dieses Messgerät weist u.a. einen Messverstärker auf, der ein Messignal wie z.B. eine Messspannung erfasst und verstärkt. Allerdings weisen derartige Messgeräte des Standes der Technik zahlreiche Nachteile auf, wie nachfolgend erläutert wird.

Die überwachte Größe kann z.B. insbesondere die Zelldichte in Bioreaktoren oder eine Farbänderung zur Identifizierung und / oder Trennung von Produkten oder Produktphasen in Rohrleitungen oder die Ultraviolett-Absorption (ein oder zwei Wellenlängen) zur Steuerung von Protein-Trennungsprozessen in der Biotechnologie sein. Im Idealfall ist die Messvorrichtung möglichst universell für solche Messungen einsetzbar.

Die Bewertung / Visualisierung der Messdaten und die Prozesssteuerungen erfolgen zunehmend unter Verwendung z.B. speicherprogrammierbarer Steuerungen in Verbindung mit grafischen Displays zur Darstellung der Benutzerschnittstelle. Eine lokale Bedienschnittstelle am Messumformer kann bei entsprechender, insbesondere bidirektionaler, Anbindung der Messvorrichtung an die Steuerung in vielen Fällen entfallen.

Messaufnehmer, Messverstärker und Messumformer sind in unterschiedlichen Ausführungen bekannt, z.B. optek Tauchsonden ASD12 oder ASD25. Bei diesen Beispielen sendet eine NIR-LED einen Lichtstrahl durch ein Fenster in einen Messspalt, der mit einem fluiden Medium (Rohrleitung, Biotech-Fermenter) gefüllt ist. Das Licht durchstrahlt das Medium und wird durch Absorption und / oder Streuung geschwächt. Der Lichtstrahl verlässt das Messvolumen und trifft auf eine Silizium-Fotodiode, in der ein der Lichtintensität annähernd proportionaler Fotostrom erzeugt wird. Aus der Schwächung des Lichts kann auf Eigenschaften des Mediums rückgeschlossen werden, z.B. existiert für Zell- oder Bakterienfermenter eine Korrelation zwischen der Zelldichte und der Schwächung des Fotostroms.

Typisch ist für diese Anwendungen, dass die zu messende Intensität viele Größenordnungen überstreicht und dass die eingestrahlte optische Intensität begrenzt ist oder begrenzt sein soll, so dass es vorteilhaft ist, möglichst kleine Fotoströme mit hoher Genauigkeit, Linearität und Reproduzierbarkeit erfassen zu können. Bei manchen Sensoren ist es möglich, die eingestrahlte optische Intensität zeitlich zu modulieren, insbesondere z.B. auch abzuschalten.

Soll ein Messumformer universell nutzbar sein, ist es vorteilhaft, wenn er auch für Sensoren eingesetzt werden kann, deren in die Wechselwirkungszone eingestrahlte Intensität zeitlich annähernd konstant und insbesondere nicht gezielt zeitlich modulierbar ist. Um eine universelle Anwendbarkeit des Messverstärkers zu erreichen, sollte trotzdem die Ansprechzeit möglichst klein sein, wobei Zeiten von etwa 100ms - 200ms zur Erkennung der Phasengrenze von Fluiden oder zur Steuerung von Ventileinheiten, z.B. bei der chromatografischen Stofftrennung, als ausreichend und betriebsbewährt gelten.

Die genannten Messeinrichtungen sollen zur Prozesssteuerung und - überwachung zum Einsatz kommen. Sie sollen daher ein zeitlich zumindest quasikontinuierliches Messignal zur Verfügung stellen, auch wenn sich die Messgrößen, wie oben beschrieben, zeitlich über einen weiten Größenbereich ändern. Die Anordnung soll kompakt robust und auch in mittleren Stückzahlen kostengünstig zu fertigen sein. Außerdem ist ein weiter Temperatureinsatzbereich gewünscht, ohne dass darunter die Messgenauigkeit leiden soll.

Für fotometrische Messaufgaben, z.B. in Spektralfotometern, bei denen kleine Fotoströme detektiert werden müssen, kommen häufig Systeme zum Einsatz, bei denen das Messlicht zeitlich mit hoher Dynamik moduliert wird (elektrisches oder mechanisches Zerhacken oder Choppen), um zeitlich langsam veränderliche Störgrößen separieren zu können (Auswertung z.B. mit Lock-In-Verstärkern). Teilweise kommen bei solchen Anordnungen auch Zweistrahllösungen zum Einsatz, bei denen die Quellintensität zeitweise mit dem Messvolumen wechselwirkt und zeitweise zu Normierungszwecken über einen vom Messvolumen nicht beeinflussten Weg dem Fotodetektor zugeführt wird.

Bei diesen Lösungen muss die Modulationsfrequenz der Messstrahlung (und damit der Fotoströme) ausreichend hoch sein, um auch unter Berücksichtigung der notwendigen Signalverarbeitung der Änderung der Messgröße ausreichend schnell folgen zu können. Dieses Prinzip erfordert zusätzlichen Aufwand zur Modulation der Lichtquelle, zur Übertragung und / oder zur Detektion der Frequenz und Phasenlage der Modulation, sowie zur Filterung des Signales (z.B. im Sinne einer phasenempfindlichen Gleichrichtung).

Ein Verzicht auf solche Maßnahmen erhöht aber die Ansprüche hinsichtlich der Größe und Konstanz ansonsten nicht korrigierbarer Störgrößen. Wichtige Aspekte geeigneter Schaltungen zur Erfassung von Fotoströmen werden in US20220214212A1 (PTL1) diskutiert. Die Aufgabenstellung zielt aber auf Anwendungen, in denen kontinuierliche Messungen nur eingeschränkt notwendig sind und die Unterbrechung der Messung zum Zweck der Konfiguration und zur Bestimmung von Störgrößen möglich ist.

Im Sinne der dort dargestellten Lösungen sollen z.B. langsam veränderliche Gleichanteile durch Referenzmessungen korrigiert werden. Das setzt allerdings voraus, dass es möglich ist, die optische Messstrahlung zu geeigneten Zeitpunkten zu unterbrechen, um den Einfluss von Störgrößen erfassen und während der Messung korrigieren zu können. Die Lehren dieser Schrift sind auf Einsatzfälle, bei denen die Messtrahlung nicht gezielt unterbunden werden kann oder soll, oder in denen das Messsignal auch bei starken Änderungen der Messgröße kontinuierlich zur Verfügung stehen soll, nur teilweise anwendbar.

Messanordnungen mit regelmäßig oder zeitweise unterbrochener Messtrahlung sind effizient zur Korrektur langsam veränderlicher Störgrößen, bieten jedoch keine intrinsische Lösung hinsichtlich der Bereitstellung eines ausreichenden dynamischen Messumfanges. In dieser Hinsicht vorteilhaft sind Fotostromverstärker, die den primären Fotostrom an einer nichtlinearen, in der Regel logarithmischen Kennlinie umsetzen (z.B. in eine Spannung), die dann z.B. mit Hilfe eines üblichen, linearen ADC (Analog-Digital-Umsetzer) gemessen werden kann. Solche Lösungen können ebenfalls PTL1 entnommen werden.

Bei Absorptionsmessungen ist häufig der Fotostrom mit der Konzentration des absorbierenden Stoffes näherungsweise über ein Lambert-Beersches Gesetz verknüpft. Im Hinblick auf die Stoffkonzentration ergibt sich damit ein zusammenhängender linearer Messbereich, der die ADC-Auflösung vollständig nutzt. Präzise logarithmischen Verstärker sind aber technisch anspruchsvoll, benötigen teilweise Thermostatisierung, liefern schwer vorhersehbare Anstiegszeiten und/oder besitzen Eingangsstufen, die die Linearität der angeschlossenen Fotostromquellen (Fotodioden) durch Eingangs-(leck)ströme und Eingangsoffsetspannungen stören. Stand der Technik sind lineare Transimpedanzverstärker (TIA) zur Erfassung von Fotoströmen, wobei die Kennlinie durch einen für eine Messbereich konstanten Gegenkopplungswiderstand (Transimpedanz) definiert und der Fotostrom proportional in eine Spannung gewandelt wird.

Die Erzielung großer Messbereiche setzt aber praktisch eine Messbereichsumschaltung durch Beeinflussung der Transimpedanz voraus, wie es auch PTL1 beschreibt. Eine diskontinuierliche Umschaltung von Messbereichen stört allerdings die Signalfilterung und erschwert es, dynamischen Signalen ausreichend schnell und genau zu folgen, weshalb in PTL1 eine Lösung mit nichtlinearer (z.B. logarithmischer) Kennlinie verwendet wird.

Hinzu kommt, dass die Schaltelemente mit Energie versorgt werden müssen. Halbleiterschalter, wie in PTL1 als mögliche Lösungen dargestellt, sind verschleißarm und schnell, sie injizieren aber schlecht kompensierbare Störladungen, die nicht von Fotoströmen zu unterscheiden sind und den erreichbaren Messbereich in Richtung kleiner Ströme ungünstig begrenzen. Der in eine Spannung umgesetzte Fotostrom kann über bekannte AD-Umsetzer in einen Digitalwert umgesetzt werden. Das scheint selbst dann vorteilhaft, wenn zur Übertragung des Messwertes an übergeordnete Steuerungen analoge Schnittstellen (z.B. 4-20mA-Stromschnittstellen) eingesetzt werden.

24-Bit-Sigma-Delta-Wandler sind nach Stand der Technik als integrierte Bausteine mit vergleichsweise geringer Leistungsaufnahme und gutem Preis-Leistungsverhältnis verfügbar. Im Stand der Technik bieten sie auch hoch wirksame interne Filter gegen Störungen bei üblichen Netzfrequenzen (50 oder 60 Hz). Preiswerte Wandler dieser Klasse mit guter Filterung und geringer Stromaufnahme reduzieren allerdings die Datenraten und erhöhen die Latenz so weit, dass Signalanstiegszeiten von 100ms - 200 ms schwer abzubilden sind. Die Bereichsumschaltung ist damit zeitlich auch verzögert, was zu Problemen führt, wenn zeitlich veränderlichen Signalen zum Zwecke der Visualisierung, Steuerung oder Regelung gefolgt werden soll.

So kann z.B. ein verzögertes Umschalten dazu führen, dass das Messignal Aussteuergrenzen in der Messkette überschreitet, und dass damit zeitweise nur stark und nichtlinear verfälschte Messwerte zur Verfügung stehen, die einen gefilterten Wert langfristig stören können.

Es ist daher die Aufgabe der vorliegenden Erfindung, die Nachteile des Stands der Technik zu beseitigen und insbesondere eine verbesserte Vorrichtung zur optischen Bestimmung einer Stoffkonzentration eines Fluids bzw. ein verbessertes Verfahren zur optischen Bestimmung einer Stoffkonzentration eines Fluids zur Verfügung zu stellen.

Gelöst wird diese Aufgabe mit dem Gegenstand der unabhängigen Ansprüche. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren angegebenen Merkmalen. In den angegebenen Wertebereichen sollen auch innerhalb der genannten Grenzen liegende Werte als Grenzwerte offenbart und in beliebiger Kombination beanspruchbar sein.

Die Erfindung betrifft eine Vorrichtung zur optischen Bestimmung einer Stoffkonzentration eines Fluids, aufweisend einen Messverstärker zur Verstärkung von gemessenen Signalen, insbesondere Fotoströmen, wobei der Messverstärker mindestens einen linearen Transimpedanzverstärker zur Erfassung und Verstärkung der Signale, insbesondere der Fotoströme, aufweist.

Das Merkmale Stoffkonzentration in dieser Offenbarung umfasst nicht nur die Konzentration eines Stoffes im engeren Sinne, sondern auch die Konzentration eines Stoffes in einer spezifischen elektronischen und / oder räumlichen Konfiguration sowie ein relatives Verhältnis solcher Konzentrationen bzw. um einen Überschuss einer solchen Konfiguration.

Die Erfindung betrifft weiterhin ein Verfahren zur optischen Bestimmung einer Stoffkonzentration eines Fluids, wobei ein Messverstärker gemessene Signale, insbesondere Fotoströme, verstärkt, wobei der Messverstärker mindestens einen linearen Transimpedanzverstärker zur Erfassung und Verstärkung der Signale, insbesondere der Fotoströme, aufweist.

Erfindungsgemäß ist es vorteilhaft insbesondere möglich, dass es gelungen ist, kontinuierliche Messdaten ohne Sprünge und mit geringer zeitlicher Latenz zur Verfügung zu stellen. Insbesondere ist weiterhin vorteilhaft der Verzicht auf logarithmische Verstärker möglich.

Alle Merkmale, die im Folgenden für die erfindungsgemäße Vorrichtung beschrieben werden, gelten sinngemäß auf für das erfindungsgemäße Verfahren und umgekehrt.

Weiterhin werden insbesondere eine Messbereichsumschaltung und eine wirksame Filterung zur Verfügung gestellt.

In einer bevorzugten Ausführungsform weist die Vorrichtung weiterhin auf:
eine ein Quellspektrum ausgebende Quelle,
ein vor einem Messvolumen angeordnetes wellenlängenselektives Mittel,
ein das Messvolumen zumindest in einem Strahlengang begrenzenden Messraum und einen Detektor zur Messung einer wellenlängenbezogenen Absorption eines durch das Messvolumen getretenen Messspektrums.

In einer anderen bevorzugten Ausführungsform weist die Vorrichtung weiterhin auf:
eine ein Quellspektrum ausgebende Quelle,
ein vor einem Messvolumen angeordnetes wellenlängenselektives Mittel,
ein das Messvolumen zumindest in einem Strahlengang begrenzenden Messraum und einen Detektor, der im Messvolumen gestreutes Licht misst.

Der Begriff Licht oder optische Strahlung soll nicht auf den sichtbaren Bereich beschränkt werden, sondern einen oder mehrere Teilbereiche aus der dem Spektrum von der ultravioletten bis zur infraroten Strahlung bezeichnen. Zur Umsetzung der optischen Intensität in einen Fotostrom kommen neben messtechnisch üblichen Fotodioden (Halbleiterdioden, z.B. auf Basis von Silizium, Germanium) alle Detektoren in Frage, die Licht in vorhersagbarer Weise in einen Fotostrom umsetzen. Die Erfindung erlaubt an einem aktiven Messeingang sowohl die Verarbeitung positiver als auch negativer Ströme, bei Fotodioden kann damit sowohl eine Kathode als auch eine Anode mit dem aktiven Messeingang verbunden werden.

In einer bevorzugten Ausführungsform ist vorgesehen, dass der Messverstärker zur kontinuierlichen Erfassung und Bereitstellung der Fotoströme für eine übergeordnete Steuerung konfiguriert ist. Hierdurch wird insbesondere vorteilhaft eine kontinuierliche, unterbrechungsfreie und sprungfreie Überwachung ermöglicht, die die Steuerung und/oder Regelung prozessrelevanter Größen, die zeitnahe Steuerung von Trennprozessen und die lückenlose Prozessdokumentation zum Zwecke der Qualitätssicherung ermöglicht.

In einer anderen bevorzugten Ausführungsform ist vorgesehen, dass eine Latenz des Messverstärkers < 500 ms ist. Diese geringe Latenz ermöglicht vorteilhaft insbesondere eine bessere und stabilere Regelung der Prozessparameter und ist im Hinblick auf die Steuerung von Trennprozessen z.B. durch Umschalten eines Fluidventils bei Erkennung einer Phasengrenze vorteilhaft.

In einer anderen bevorzugten Ausführungsform ist vorgesehen, dass ein Messbereich des Messverstärkers < 4 Dekaden beträgt. Durch die Beschränkung der Dynamik des Messbereiches zwischen den Umschaltpunkten bleibt insbesondere vorteilhaft genügend Reserve, um am unteren Messbereichsende eine hinreichende Auflösung und am oberen Messbereichsende einen hinreichenden noch messbaren Signalüberlauf sicherzustellen, so dass auch dynamisch veränderlichen Signalen trotz Bereichsumschaltung ohne schwerwiegenden Informationsverlust am Umschaltpunkt gefolgt werden kann.

In einer anderen bevorzugten Ausführungsform ist vorgesehen, dass der Messverstärker eine Messbereichsumschaltung aufweist. Dadurch ist insbesondere vorteilhaft ein besonders großer Gesamtumfang der Messdynamik bei einem Verzicht auf logarithmische Verstärker realisierbar.

Weiter bevorzugt ist vorgesehen, dass die Messbereichsumschaltung ein Reedrelais aufweist. Dadurch ist es vorteilhaft insbesondere möglich, eine Messbereichsumschaltung zu realisieren, die zur Erfassung unmodulierter Fotoströme geeignet ist, da sie dauerhaft eine hohe Schaltdynamik (hohe Isolation gegen Störströme und geringer Einschaltwiderstand) gewährleistet.

In einer anderen bevorzugten Ausführungsform ist vorgesehen, dass der Messverstärker einen Eingangsschutz durch Dioden aufweist, die auf ein Eingangspotential des Messverstärkers angebunden sind. Leckstromarme Verstärkereingänge (in der Regel auf Basis isolierter Feldeffekttransistoren) sind empfindlich gegen elektrostatische Entladungen. Ein technisch betriebssicherer Einsatz wird vorteilhaft ermöglicht, wobei die Potentialdifferenz über die Schutzdioden möglichst gering sein soll, um Leckströme zu minimieren.

Störgrößenarme Eingangsstufen für Transimpedanzverstärker enthalten empfindliche Bauteile, die bereits durch geringe Belastung (z.B. elektrostatische Entladung / ESD) störend geschädigt werden können. Der betriebssichere Einsatz setzt deshalb geeignete Schutzbeschaltungen voraus. Der Schutz der Verstärkereingänge mit Halbleiterdioden, die Spannungsspitzen direkt gegen die positive bzw. negative Versorgungsspannung des Verstärkers ableiten, führt wegen der hohen über den Dioden anliegenden Spannung zu inakzeptablen, temperaturabhängigen Störströmen über diese Dioden.

Eine Lösung besteht darin, zwei parallele, entgegengesetzt gepolte Dioden auf eine Spannung anzubinden, die sehr nahe an der Spannung des jeweiligen Einganges liegt. Hier können auch Lösungen zum Einsatz kommen, die Schutzdioden, einen Spannungsfolger und Ableitdioden in einem Gehäuse oder in einem integrierten Schaltkreis zusammenfassen.

In einer anderen bevorzugten Ausführungsform ist vorgesehen, dass ein metallisches Gehäuse mit einer niederohmigen Anbindung an einen Referenzeingang des Messverstärkers angeordnet ist. Dadurch wird vorteilhaft insbesondere eine geringe Empfindlichkeit gegen im technischen Umfeld zu erwartende elektrische Störfelder erreicht.

In einer anderen bevorzugten Ausführungsform ist vorgesehen, dass eine galvanische Trennung eines Fotostromeingangs des Messverstärkers von einer Versorgungseinheit und / oder einer Kommunikationseinheit angeordnet ist. Durch die galvanische Trennung werden Störströme in empfindlichen Teilen der Vorrichtung bzw. des Messverstärkers und damit auch Störspannungen, die diese Ströme an Induktivitäten und Leiterbahnwiderständen hervorrufen, vorteilhaft minimiert. Damit vermindern sich insbesondere die Störeinflüsse auf die Bezugspotentiale (z.B. ADC relativ zum nichtinvertierenden Eingang des Transimpedanzverstärkers).

In einer anderen bevorzugten Ausführungsform ist vorgesehen, dass der Messverstärker eine Dämpfung für Störungen von 50/60 Hz > 100 dB aufweist. Eine derart hohe Dämpfung der Störungen von 50/60 Hz ist ermöglicht insbesondere vorteilhaft eine unbeeinflusste Messung auch kleiner Fotoströme.

In einer anderen bevorzugten Ausführungsform ist vorgesehen, dass die Vorrichtung bzw. das Verfahren zur Erfassung unmodulierter Strahlung konfiguriert ist. Der Vorteil besteht insbesondere darin, dass Signale von Messgebern ausgewertet werden können, die keine Modulation der Quelle vorsehen oder Quellen benutzen, die nicht einfach modulierbar sind.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen jeweils in schematischer Ansicht:
Fig. 1 zeigt ein Prinzipschaltbild eines Messverstärkers einer erfindungsgemäßen Vorrichtung,
Fig. 2 zeigt eine Messverstärkerleiterkarte für einen Messverstärker einer erfindungsgemäßen Vorrichtung, wobei links eine Draufsicht von oben, mittig eine Seitenansicht und rechts eine Draufsicht von unten dargestellt sind,
Fig. 3 zeigt ein Diagramm, in dem eine relative Koeffizientengröße b in Abhängigkeit eines Koeffizientenindex a aufgetragen ist,
Fig. 4 zeigt eine Durchlasskurve,
Fig. 5 zeigt ein Gehäuse eines Messverstärkers einer erfindungsgemäßen Vorrichtung und
Fig. 6 zeigt eine beispielhafte Ausführungsform einer erfindungsgemäßen Vorrichtung.

In den Figuren sind Vorteile und Merkmale der Erfindung mit diese jeweils identifizierenden Bezugszeichen gemäß Ausführungsformen der Erfindung gekennzeichnet, wobei Bauteile beziehungsweise Merkmale mit gleicher oder gleichwirkender Funktion mit identischen Bezugszeichen gekennzeichnet sind.

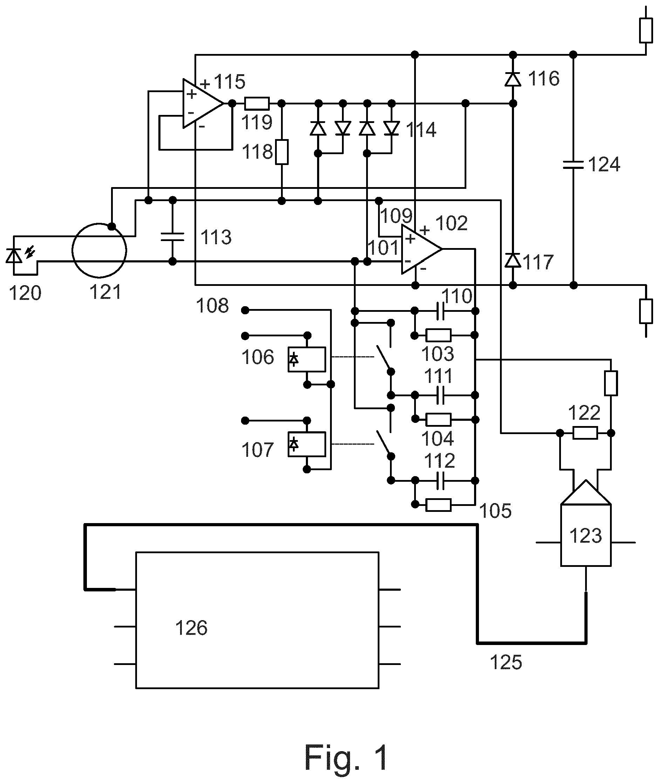

Erfindungsgemäß erfolgt die Erfassung von Fotoströmen durch einen linearen Transimpedanzverstärker (TIA) entspr. Fig. 1. Die Fotoströme werden einem invertierenden Eingang 101 eines Operationsverstärkers 102 zugeführt und es besteht eine Gegenkopplung zumindest aus einem Widerstand 103 als Transimpedanz von einem Ausgang auf den invertierenden Eingang 101. Der Operationsverstärker 102 und der Widerstand 103 bilden den linearen Transimpedanzverstärker.

Zur Realisierung mehrerer Messbereiche werden dem Widerstand 103 ein oder mehrere Widerstände 104, 105 parallel schaltbar zugeordnet. Eine Kennlinie (Ausgangsspannung eines Messverstärkers als Funktion eines Eingangsstromes) ist dabei annähernd linear ausgebildet, verzichtet also bis auf eine nichtlineare, insbesondere exponentielle oder logarithmische, Gegenkopplung.

Um möglichst kleine Fotoströme messen zu können ist die Minimierung und / oder Kompensation von Leckströmen notwendig.

Als Schaltelemente können vorteilhaft Reedrelais 106, 107 zum Einsatz kommen. Diese ermöglichen eine mit Halbleiterschaltern nicht erreichbare Dynamik (hoher Isolationswiderstand im nicht betätigten Zustand, sehr geringer Restwiderstand im geschalteten Zustand). Darüber hinaus ist die Trennung zwischen dem Steuerkreis und dem geschalteten Kreis besser als es mit Halbleiterschaltern zu erreichen wäre.

Die theoretisch begrenzte, zuverlässig erreichbare Schaltspielzahl stellt in den meisten realen Anwendungen unter Berücksichtigung des zeitlichen Verhaltens der Messgröße keine Einschränkung der Lebensdauer dar, insbesondere wenn eine Messbereichsumschaltung mit ausreichender Hysterese (z.B. zumindest 10%, besser 30% bevorzugt mehr als 40% des empfindlicheren Messbereiches) ausgebildet wird.

Die Schaltelemente benötigen Platz, sind teuer und sind mögliche Quellen von Störströmen. Ihre Anzahl, insbesondere im Einflussbereich des invertierenden Eingangs des TIA sollte deshalb minimiert werden. Zur weitergehenden Reduzierung von Störströmen sind Betätigungswicklungen bevorzugt an einem Anschluss 108 an ein Potential angebunden, das sehr nahe am Potential des nichtinvertierenden Anschlusses 109 des Transimpedanzverstärkers liegt, insbesondere mit diesem niederohmig verbunden ist. Im nicht angesteuerten Zustand liegt die gesamte Betätigungswicklung auf diesem Potential, was im eingeschwungenen Zustand des Transimpedanzverstärkers sehr nahe am Potential des invertierenden Einganges liegt. Damit gibt es keine nennenswerten Spannungen, die unerwünschte Leckströme zwischen der Betätigungswicklung und dem Fotostromeingang treiben.

Unempfindlichere Messbereiche können dadurch realisiert werden, dass dem Gegenkopplungswiderstand für den empfindlichsten Messbereich Widerstände parallel geschaltet werden. Es sollte auf Schaltelemente im Pfad des höchsten Gegenkopplungswiderstandes verzichtet werden. Damit sind im empfindlichsten Messbereich alle Schaltelemente inaktiv und der Einfluss der Ansteuerung der Schaltelemente kann minimiert werden. Bei der Verwendung von Relais als Schalter liegen im empfindlichsten Messbereich damit alle Betätigungswicklungen vollständig auf unkritischer Spannung. In der bevorzugten Ausführungsform wird der Transimpedanzverstärker mit 3 Messbereichen (MB4, MB3, MB2) ausgestattet.

Als Operationsverstärker 102 wird ein integrierter Baustein mit geringer Eingangsoffsetspannung und geringem Eingangsstrom und FET-Eingangstransistoren verwendet. Das angestrebte Leistungsniveau ist damit unter Verzicht auf einen diskreten Aufbau erreichbar. Die wirksamen Transimpedanzen in den jeweiligen Messbereichen sind etwa 100 Megaohm 103 (empfindlichster Messbereich, MB4), dem 560 kOhm 104 (MB3) und zusätzlich 3000 Ohm 105 (MB2) parallel geschaltet werden können. Der Aussteuerbereich des TIA liegt bei etwa +/- 5V. Soweit vorhanden wird oberhalb 4,75 V bzw. unterhalb 0,0125V in einen anderen Messbereich gewechselt.

Das stellt einen ausreichenden Abstand zwischen Umschaltpegel und oberer Aussteuergrenze (Signalbegrenzung) bzw. unterer Aussteuergrenze (mangelnde Auflösung) sicher, um auch veränderlichen Signalen folgen zu können. Außerdem ergibt sich eine deutliche Schalthysterese, die ein häufiges Schalten der Messbereiche unter realen Prozessbedingungen verhindert.

Zur Begrenzung der Bandbreite des Transimpedanzverstärkers und zur Reduzierung der unerwünschten Schwingneigung ist es sinnvoll, den Gegenkopplungswiderständen Kapazitäten 110, 111, 112 parallel zu schalten. Diese müssen an die Eigenschaften des verwendeten Verstärkers und vor allem an die Eingangskapazität am invertierenden Eingang 101 angepasst werden.

Sind hohe Eingangskapazitäten zu erwarten, so müssen größere Gegenkopplungskapazitäten gewählt werden. Ist die Kabellänge zum Anschluss der Fotodiode an den Transimpedanzverstärker variabel, so muss aus Stabilitätsgründen eine große Gegenkopplungskapazität gewählt werden. Bei Verwendung kurzer Kabel mit geringen Kapazitäten kann das dann zu einer starken Veränderung der Signalbandbreite führen.

Der starken Variation der Signalbandbreite kann entgegengewirkt werden, indem die wirksame Eingangskapazität bewusst durch Parallelschalten eines Kondensators erhöht wird. Damit wird die maximal erreichbare Bandbreite zwar verringert, dem steht aber eine deutlich verringerte Änderung der Bandbreite in Abhängigkeit der Kabellänge (oder anderer Quellen der Eingangskapazität) entgegen, was die weitere Signalbehandlung, z.B. durch Frequenzfilterung, vereinfacht.

In einer bevorzugten Ausführungsform: 33pF für MB4, zusätzlich 220nF für MB3, zusätzlich 1nF für MB2. Diese lassen den Betrieb mit einer Eingangskapazität von 50 nF zu, die den weiteren Einfluss von externen Kabelkapazitäten bis zu 30m mit 200pF/m abmildern.

Störgrößenarme Eingangsstufen für Transimpedanzverstärker enthalten empfindliche Bauteile, die bereits durch geringe Belastung (z.B. elektrostatische Entladung / ESD) störend geschädigt werden können. Der betriebssichere Einsatz setzt deshalb geeignete Schutzbeschaltungen voraus. Der Schutz der Verstärkereingänge mit Halbleiterdioden, die Spannungsspitzen direkt gegen die positive bzw. negative Versorgungsspannung des Verstärkers ableiten, führt wegen der hohen über den Dioden anliegenden Spannung zu inakzeptablen, temperaturabhängigen Störströmen über diese Dioden.

Eine alternative Lösung besteht darin, zwei parallele, entgegengesetzt gepolte Dioden auf eine Spannung anzubinden, die sehr nahe an der Spannung des jeweiligen Einganges liegt. Hier können auch Lösungen zum Einsatz kommen, die Schutzdioden 114, einen Spannungsfolger 115 und Ableitdioden 116, 117 in einem Gehäuse oder in einem integrierten Schaltkreis zusammenfassen.

Der Spannungsfolger induziert durch seine Eingangsoffsetspannung allerdings einen zusätzlichen Spannungsoffset über den Schutzdioden (und generiert damit zusätzliche Störströme). Dieses kann vermieden werden, wenn die Schutzdioden direkt niederohmig über einen Widerstand 118 oder eine Leiterbrücke an den nichtinvertierenden Eingang 109 angebunden werden. Der Spannungsfolger wird in diesem Fall durch einen (möglicherweise bereits integrierten) Widerstand sowohl abgekoppelt als auch gegen Überlast geschützt. Der Spannungsfolger 115 und der Widerstand 119 können, wenn es die integrierte Lösung zulässt, auch entfallen.

Im Bereich des Transimpedanzverstärkers und dessen Eingangsleitungen 109, 113, 101 ist der Messverstärker empfindlich gegen den Einfluss elektrischer Felder und gegen Störströme. Das gilt insbesondere für den mit dem invertierenden Eingang des Transimpedanzverstärkers niederohmig verbundenen Schaltungsteil (der aktive Messeingang - in der bevorzugten Ausführungsform mit einer Kathode der Fotodiode 120 verbunden, die in der bevorzugten Ausführung nicht Teil des Messverstärkers, sondern des externen Messaufnehmers ist -, die Verbindung zu den Reed-Relais, Rückkopplungsbauteile, insbesondere des empfindlichsten Messbereiches).

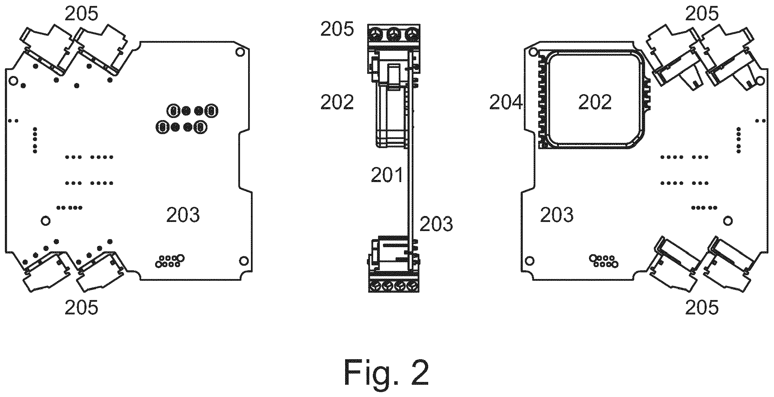

Elektrische Feldkomponenten können durch elektrische Schirmmaßnahmen 121, die niederohmig mit dem nichtinvertierenden Eingang 109 verbunden sind, minimiert werden. In der bevorzugten Ausführungsform kommt ein Schirmgehäuse aus Metallblech zum Einsatz, um die empfindlichen Schaltungsteile (insbesondere der Transimpedanzverstärker einschließlich der Rückkopplungsbauteile, der Schaltelemente und der ESD-Schutzbeschaltung) zu schützen. Aus Fig. 2 lassen sich einige mechanische Eigenschaften der bevorzugten Ausführung ablesen. Das Schirmgehäuse mit TIA 201 wird im Leiterkarten - Bestückungsprozess auf die Leiterkarte aufgelötet, wobei Wert auf eine dichte Verbindung zur Leiterkarte gelegt wird. Außerdem wird die Leiterkarte selbst im Bereich des Schirmgehäuses dicht ausgebildet (z.B. keine offenen Durchkontaktierungen).

Der Zugang zum Innern des Schirmgehäuses ist über einen aufsteckbaren Deckel 202 aus Metallblech möglich. Dadurch kann das Schirmgehäuse als verlorene Form für eine isolierende Vergussmasse genutzt werden. Diese Vergussmasse schützt die empfindlichen Bereiche des Transimpedanzverstärkers gegen Verschmutzung und gegen den Zutritt von Luftfeuchtigkeit. Die Leiterkarte ist etwas größer als das Schirmgehäuse und hat am Rand zahnartig ausgebildete Kontaktflächen für die mechanische und elektrische Kontaktierung. Sie bildet zusammen mit Schirmgehäuse und Verguss ein Modul, das auf die Hauptleiterkarte 203 aufgelötet wird.

Die empfindlichen Bereiche, sowohl im Verguss als auch außerhalb, werden insbesondere von Schaltungsteilen, die ein abweichendes Potential annehmen können, sehr sorgfältig geschützt. Dabei kommen leitende Strukturen 121 als Schirme zum Einsatz (z.B. Leiterbahnen), die entweder direkt am nichtinvertierenden Eingang 109 des TIA oder an dessen Bezugsspannung angebunden sind. Sie umschließen die Leiterbahnen der empfindlichen Schaltungsteile fast vollständig, zumindest jedoch weitgehend. Zur Sicherstellung der Wirkung haben diese Metallstrukturen offene Oberflächen (keine Lackierung).

Um Leckströme innerhalb des Leiterkartenmaterials zu minimieren werden, in die Schirmleiterbahnen Durchkontaktierungen eingebracht, deren überwiegende Funktion die Aufnahme von Leckströmen ist, die also zum Führen von Betriebsströmen nicht notwendig wären. Damit lassen sich Leckströme auch bei erhöhten Temperaturen und bei erhöhter Luftfeuchtigkeit auf einem Niveau beherrschen, dass es möglich macht, bei der bevorzugten Ausführungsform auf den Einsatz von anderen Leiterkarten-Basismaterialien als glasfaserverstärkten Epoxidharzen zu verzichten, insbesondere ist die Verwendung von Fluorkunststoffen als Grundmaterial nicht notwendig.

In der bevorzugten Ausführungsform ist damit möglich, die nicht kompensierten Störströme des Messumformers über einen weiten Bereich von Temperatur und Luftfeuchtigkeit auf weniger als 500 fA zu reduzieren. Da kleine Fotoströme gemessen werden sollen, können sich insbesondere in den Fotostromkreisen (Kapazitäten zwischen Anodenleitung und Kathodenleitung der Fotodiode, bzw. zwischen Invertierendem Eingang und nichtinvertierendem Eingang des TIA sowie Kapazitäten im Rückkopplungsweg des TIA) Effekte der dielektrischen Absorption, insbesondere in empfindlichen Messbereichen, störend bemerkbar machen. In der bevorzugten Ausführungsform kommen an diesen Stellen Kondensatoren mit Kunststoffdielektrikum zur Anwendung, insbesondere mit einem Dielektrikum aus PP, PET oder PPS, wobei bevorzugt SMD-Kondensatoren eingesetzt werden können. Zur Optimierung des Rauschverhaltens findet die Signalverstärkung bereits im Transimpedanzverstärker statt, auf eine weitere Spanungsverstärkung vor oder im Analog-Digitalkonverter (ADC) 123 wird verzichtet.

Die Eingangsoffsetspannung des Transimpedanzverstärkers taucht als Offsetspannung auf dessen Ausgang auf. Wenn der Aussteuerbereich des Transimpedanzverstärkers es zulässt, macht es Sinn, diesen höher als den zulässigen Spannungsbereich der nachfolgenden Schaltung (z.B. Eingangsdynamikbereich ADC) zu wählen und vor deren Eingang durch einen Spannungsteiler 122 zu reduzieren, weil die störende Eingangsoffsetspannung im Teilungsverhältnis reduziert wird. In der bevorzugten Ausführungsform wird die Ausgangsspannung des TIA nominell halbiert. Dieser Spannungsteiler kann dann auch einfach durch eine in Fig 1 nicht dargestellte Kapazität parallel zum differentiellen Messeingang des ADC zu einem RC-Glied erweitert werden, mit dem das Signal vor der AD-Wandlung auf eine sinnvolle Bandbreite begrenzt wird. Damit kann die Gefahr, dass der ADC durch Störungen in den Bereich der Übersteuerung gerät, verringert werden. Ebenso werden hierdurch Störanteile durch Unterabtastung reduziert. In der bevorzugten Ausführungsform beträgt die Zeitkonstante etwa 3,3 ms.

Je nach Polarität des Fotostromes (z.B. Anode oder Kathode der Fotodiode mit dem invertierenden Eingang verbunden) produziert der TIA negative oder positive Ausgangsspannungen. Soll, z.B. aus Gründen der Abschirmung (z.B, Gehäuse der Fotodiode ist mit der Kathode verbunden), die Anode mit dem invertierenden Eingang des Transimpedanzverstärkers verbunden werden, entsteht eine ungünstige Situation im Hinblick auf den ADC, weil die zu erfassenden Spannungen negativ gegenüber dem Bezugspotential sind. Die Spiegelung des Messignales an der Bezugsspannung oder die Verschiebung um einen konstanten Betrag induzierte zusätzliche Störgrößen (z.B. Eingangsoffsetspanung eines Operationsverstärkers).

In der bevorzugten Ausführungsform wir deshalb ein ADC benutzt, der sowohl positive als auch negative Eingangsspannungen erfassen kann (nominell zwischen -5V und +5V bezogen auf den Referenzpunkt 109), obwohl der nutzbare Messbereich tatsächlich im Wesentlichen nur positive Spannungen nutzt. Dadurch verringert sich der Bauteilaufwand. Die dadurch von 24 Bit auf 23 Bit verringerte nutzbare AD-Wandler-Auflösung wird durch den verringerten Einfluss zusätzlicher Störgrößen zumindest teilweise kompensiert. So führen Störgrößen (z.B. Leckströme und Eingangsoffsets des Transimpedanzverstärkers, aber auch elektromagnetische Störungen mit zeitlich verschwindendem Mittelwert) nicht dazu, dass kleine Signale unterhalb des Erfassungsbereiches des AD-Wandlers liegen und damit nicht mehr sicher erfasst werden. Eine in PTL1 unter diesem Aspekt vorgeschlagene Aufschaltung von Kompensationsströmen, die eine feste Polarität des Eingangssignales sicherstellen, kann damit entfallen.

Außerdem ergibt sich damit eine weitgehend symmetrische Auslegung der Versorgungsspannungen sowohl des TIA als auch des ADC relativ zum Bezugssignal. Das vereinfacht die Filterung der Versorgungsspannung 124, die insbesondere für ADC und TIA gemeinsam genutzt werden kann und verringert die Resteinflüsse der Versorgungsspannung auf das Messergebnis. Wie in Fig.1 schematisch dargestellt kann die Anbindung des AD-Wandlers 123 an einen Mikrocontroller 126 z.B. über einen seriellen SPI-Bus erfolgen.

In einer bevorzugten Ausführung der Erfindung erfolgt die Signalabtastung mit einer Modulatorfrequenz des Sigma-Delta-ADC von 256kHz. Aus einer Vielzahl von im Wandler implementierten Filterfunktionen wird eine Kombination gewählt, die die Daten mit niedriger Latenz (Die Filterkette schwingt innerhalb eines Filter / Dezimierungszyklusses ein, die Signalverzögerung entspricht im kontinuierlichen Betrieb der Zeitspanne zwischen zwei Datenpunkten auf dem Ausgang) und relativ hoher Ausgangsdatenrate von etwa 400 Datenpunkten pro Sekunde mit einer Datenbreite von jeweils 24 Bit.

Der Verzicht auf weitere Dezimierung und/oder Filterung im AD-Wandler, insbesondere der Verzicht auf den Einsatz von sinc³-Filtern, stellt einen kontinuierlichen Datenstrom mit relativ geringer Latenz sicher. Durch den Einsatz nach Stand der Technik üblicher Mikrocontroller (z.B. ARM-Cortex-M4-Derivate) ist es möglich, preiswert genügend Rechenleistung, Programm- und Datenspeicher zur Verfügung zu stellen, um auch digitale Filter relativ hoher Ordnung zu berechnen.

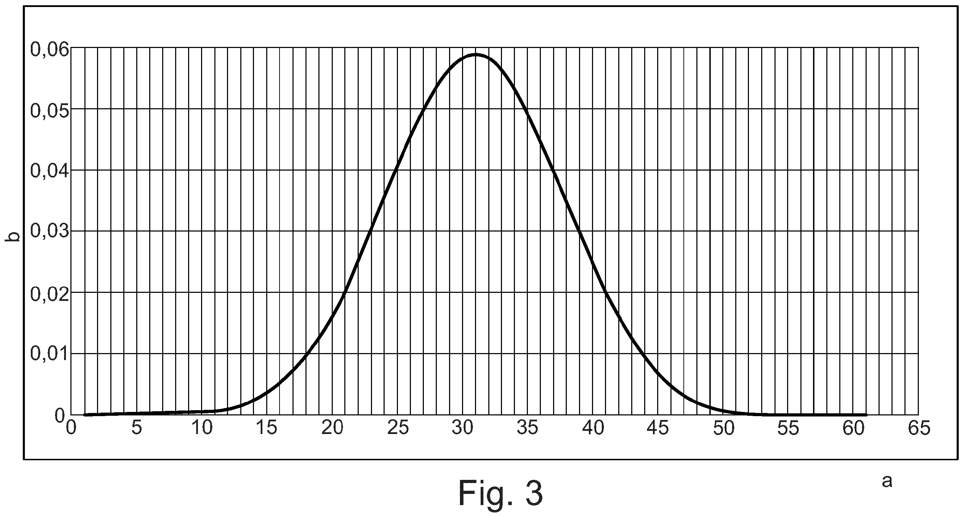

In einer bevorzugten Ausführungsform kommt ein FIR-Filter 60. Ordnung (61 symmetrische reelle positive Koeffizienten für die Normalform 1, Auflösung der Koeffizienten 16 Bit), zum Einsatz. Die relative Verteilung der Koeffizienten kann Fig. 3 entnommen werden, Abweichungen der Normierung von 1 können an anderer Stelle der Verrechnung berücksichtigt werden.

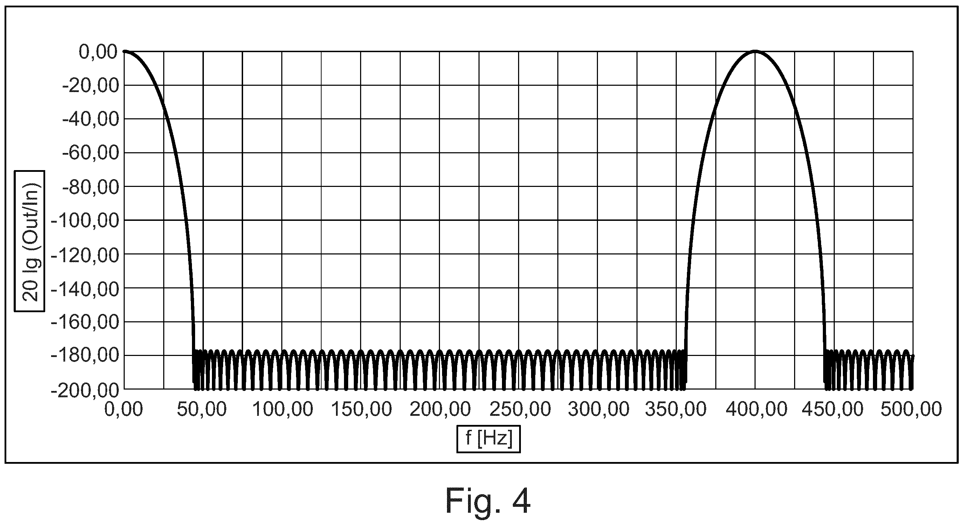

Damit ist es möglich, sehr hohe Dämpfungen im Bereich versorgungsnetzbedingter Störungen (50Hz und / oder 60 Hz) und daraus resultierenden Oberschwingungen (z.B. durch Gleichrichtung der Netzspannung erzeugte ganzzahlige Vielfache der Grundfrequenz, wobei die Störamplituden mit zunehmender Frequenz stark abnehmen) zu erzeugen. Dabei bleibt die Latenz in für die oben beschriebenen Anwendungen akzeptablen Grenzen: man erkennt, dass prinzipbedingt die Wirkung des Eingangssignals auf den Ausgang des Filters um maximal 61 / (400/s) also ca. 150 ms verzögert werden kann. Ein Sprung wird nach 75 ms zumindest zu 50% auf dem Ausgang abgebildet. Fig. 4 stellt die berechnete Wirkung des Filters dar.

Mit dem gewählten Filter in Kombination mit der Übertragungsfunktion der analogen Signalkette und der Übertagungsfunktion des ADC in der gewählten Betriebsart können die Grundwellen der Störungen bei 50 Hz rechnerisch um mehr als 160 db (20 log (In /Out)) gedämpft werden; Störungen mit der vollen Eingangsamplitude werden so weit gedämpft, dass die Amplitude am Filterausgang nominell weniger als 1Bit (bei 24 Bit Auflösung) betragen wird. Diese hohe Dämpfung steht bis oberhalb von 350Hz zur Verfügung. Damit sind sehr hohe Dämpfungen bis zur 7-fachen Grundfrequenz (50 Hz) bzw. bis zur 6-fachen Grundfrequenz (60Hz) erzielbar.

Zur Erzielung eines großen dynamischen Messbereiches wird der Transimpedanzverstärker umgeschaltet. An den Umschaltgrenzen wechselt damit die Skalierung des Ausgangssignales des ADC. In der bevorzugten Ausführungsform wird die notwendige Normierung am Ausgang des digitalen Filters berücksichtigt. Im Umschaltmoment werden alle bereits im Filter befindlichen ADC-Werte auf die neu anzuwendende Skalierung umnormiert, um ein unnötiges Einschwingen des Filters zu verhindern.

Nach dem Umschalten zwischen zwei Messbereichen zeigt der Transimpedanzverstärker ein Einschwingverhalten. In der bevorzugten Ausführung ist dieses am langsamsten, wenn in den empfindlichsten Messbereich geschaltet wird. Hier ist es hilfreich, die Bandbreite relativ hoch, aber noch im stabilen Betriebsbereich des TIA zu wählen, um ein schnelles Einschwingen zu erreichen. In der bevorzugten Ausführung werden weniger als 10 Ausgangswerte durch das Umschalten beeinflusst.

Die Störungen können minimiert werden, indem nach dem Umschalten die gestörten ADC-Werte durch Schätzwerte ersetzt werden. In der bevorzugten Ausführungsform wird der letzte Ausgangwertes des digitalen Filters (unter Beachtung der korrekten Skalierung) als Ersatzwert verwendet. Je nach erwartetem zeitlichem Verlauf der Eingangsgröße stellt dieser Wert eine bessere Schätzung für die Ersatzwerte dar als z.B. der letzte verfügbare ADC-Wert das täte, da kurzfristige Störeinflüsse bereits herausgefiltert wurden. Unter realen Bedingungen sind mit der gewählten Anordnung Ströme von 50pA mit einem Rauschanteil von 0,5 pA messbar. Die unkorrigierten Störgrößen betragen eingangsbezogen im empfindlichsten Messbereich und bei 65°C Umgebungstemperatur weniger als 500fA. Gemessen werden können Ströme bis oberhalb von 1,5 mA.

Die Messbereiche werden hinsichtlich Steilheit (wirksame Transimpedanz) und Achsenabschnitt (Eingangsoffset des TIA und Leckströme) individuell im Werk charakterisiert und die Messwerte vor der Filterung entsprechend korrigiert und normiert. Auf eine neue Charakterisierung kann über die Lebensdauer des Gerätes verzichtet werden. An den Umschaltstellen der Messbereiche ergeben sich Restsprünge, die gegenüber dem Rauschanteil nach Filterung vernachlässigt werden können.

Der Messumformer stellt in der Regel auch die Energie für den Betrieb der Lichtquellen in elektrischer Form bereit. In der bevorzugten Ausführungsform wird eine annähernd konstante Spannung zur Verfügung gestellt, die, insbesondere vom Mikrocontroller aus, schaltbar ist. Der von der Lichtquelle aufgenommene Strom wird überwacht, insbesondere zeitlich aufgelöst gemessen. Im Falle einer Fehlfunktion (z.B. unzulässig hoher Stromaufnahme, Quelle nicht angeschlossen) kann die Versorgungsspannung vom Mikrocontroller ausgeschaltet werden. Darüber hinaus besteht die Möglichkeit, eine von der Steuerung der Lichtquelle zeitlich modulierte Stromaufnahme zu erfassen und damit Informationen (z.B. zum Betriebsstatus, zur Betriebsdauer oder zu den Umgebungsbedingungen der Lichtquelle) an den Messverstärker zu übertragen. Im Fehlerfall kann die Versorgungsspannung periodisch eingeschaltet werden, um das Fortbestehen des Fehlerbildes zu überprüfen und beim Wegfall den Normalbetrieb wieder aufzunehmen.

Zur Kommunikation mit einer übergeordneten Steuerungseinheit verfügt der Messumformer über eine Schnittstelle, in der bevorzugten Ausführungsform über eine elektrische, differentielle, insbesondere 2-Draht-RS485-Schnittstelle mit zusätzlicher Leitung für das Bezugspotential, über die Daten bidirektional in einer mit üblichen MODBUS-Installationen kompatiblen Weise übertragen werden (MODBUS RTU mit Datenraten von 9600, 19200 und 38400 Bit/s). Über die bidirektionale digitale Kommunikation kann der Messumformer identifiziert (Gerätetyp, individuelle Identifikation / Seriennummer) und konfiguriert werden (Busadresse,
Übertragungsparameter). Außerdem kann der Anwender einen Startwert setzen, zu dem relativ verrechnete Messwerte ausgegeben werden. Die Messwerte stehen sowohl mit als auch ohne Verrechnung des Startwertes zur Verfügung, wobei auch ein auf den Startwert bezogener logarithmischer Verhältniswert bereitgestellt wird.

Die verrechneten Messwerte werden mit einer Zykluszeit von etwa 100ms aktualisiert. Die Ansprechzeiten liegen typisch bei unterhalb 150 ms, an den Umschaltpunkten unterhalb 200 ms. Die lokale Benutzerschnittstelle des Messverstärkers beschränkt sich in der bevorzugten Ausführungsform auf einige LED zur Signalisierung der Versorgungsspannung und der Betriebsbereitschaft, des Empfangs von digitalen Daten, und der Signalisierung erkannter Fehlerzustände. Diese LED sind durch lichtdurchlässige Öffnungen der Frontplatte 502 sichtbar. Auf ein Display zur Anzeige von variablen Symbolen, Texten oder Ziffern wird verzichtet und der gesamte Konfigurations- und Funktionsumfang wird über die digitale Schnittstelle zugänglich gemacht. Darüber hinaus ist ein Reset-Taster vorhanden, mit dem sowohl ein Neustart als auch ein Rücksetzen auf Werkseinstellungen möglich ist.

Der Messverstärker in der bevorzugten Ausführungsform dient dem Betrieb von Sensoren wie z.B. optek ASD12, bei denen LED-Lichtquellen und Fotostromsensoren räumlich benachbart angeordnet in einem metallischen Gehäuse angeordnet sind und ähnlichen Störeinflüssen (EMV) ausgesetzt sind. Darüber hinaus erfolgen die LED-Versorgung und die Ableitung der Fotoströme in einem gemeinsamen Kabel. Es wird daher auf eine galvanische Trennung zwischen der Spannungsversorgung für die Lichtquellen und der Messschaltung für die Fotoströme verzichtet. Eine galvanische Trennung zwischen Fotostrommesseingängen und Versorgungsspannung, zwischen Fotostromeingängen und digitaler Kommunikationsschnittstelle (RS485) sowie zwischen digitaler externer Kommunikationsschnittstelle und Energieversorgung ist hingegen ausgebildet, wobei zumindest eine Funktionaltrennung mit einer Nominalspannung von 250V AC ausgebildet wird.

Zur verbesserten Störfestigkeit, insbesondere gegen Stoßspannungen, ist die Kopplung zwischen den Potentialinseln kapazitätsarm, insbesondere mit einer parasitären Kapazität < 5nF ausgelegt. Der Messverstärker hat mehrere Anschlussmöglichkeiten für PE (protected earth)-Schutzleiter, um die Anbindung an den lokalen Potentialausgleich zu ermöglichen. Diese Verbindung kann genutzt werden, um einen möglichen Schirm des RS485-Kabels lokal auf PE aufzulegen sowie eine hochohmige Verbindung des Fotostromkreises mit dem Erdpotential zu ermöglichen. Letzteres erhält die positive Wirkung der Potentialtrennung, erlaubt aber das Abfließen tribologisch erzeugter elektrostatischer Ladungen, die störende Verschiebungsströme im Messkreis oder sporadische Entladungen mit breitem Störspektrum erzeugen können.

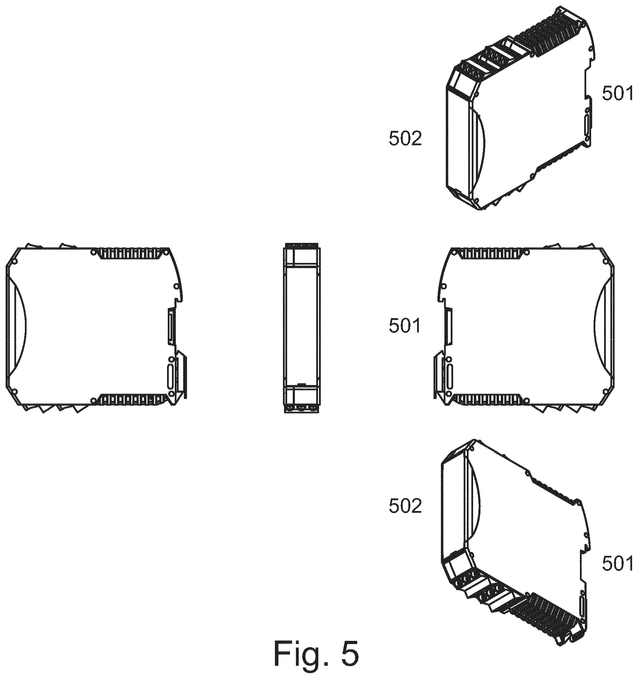

Um den Messumformer einfach installieren zu können, ist er in der bevorzugten Ausführungsform mit einem schmalen Kunststoffgehäuse versehen (Fig. 5), das die Montage auf Standard-Hutschienen mit Hilfe einer gefederten Rastung 501 erlaubt. Er besitzt eine Hauptleiterkarte 203 (Fig. 2), die senkrecht zur Montagerichtung der Hutschiene und parallel zu den Haupterstreckungsrichtungen des Gehäuses liegt. Auf der Hauptleiterkarte wird eine weitere Leiterkarte 204 parallel montiert, die den Transimpedanzverstärker mit seinem Schirmgehäuse und seinen Schaltelementen und mit seinen Rückkopplungselementen trägt. Zur Kontaktierung der externen Schaltungsteile ist das Gehäuse mit 4 Klemmleisten 205 mit jeweils 3 oder 4 Schraubklemmen versehen.

Die Längsrichtung der Klemmleisten (Richtung, in der die Klemmstellen angeordnet sind) steht senkrecht auf der Hauptleiterkarte, wobei die Klemmleisten Kontaktelemente enthalten, die direkt mit der Leiterkarte verlötet sind. Die Klemme des aktiven Messeingangs der Fotostromkreise (in der bevorzugten Ausführung der Anodenzweig) ist zwischen dem inaktiven Messeingang (in der bevorzugten Ausführung der Kathodenzweig) und dem auf annähernd gleichem Potential angeordneten Schirmanschluss platziert. Diese Anordnung der Klemmleiste und der Signale erlaubt große Luft bzw. Kriechstrecken um den aktiven Messeingang herum. Dort, wo diese Strecken klein sind, ist zumindest sichergestellt, dass die Potentialunterschiede leitfähiger Teile zum aktiven Messeingang gering sind. Der aktive Messeingang ist dadurch gut gegen Störströme abgeschirmt. Die Versorgung erfolgt mit einer Gleichspannung mit nominell 24V +- 20 % und einer Leistung von etwa 5 Watt.

In der oben beschriebenen ersten bevorzugten Ausführungsform dient der Messumformer der Versorgung eines Einkanal-Absorptionssystems, z.B. optek-Absorptionssonden ASD12 oder ASD25.

In einer **zweiten** beispielhaften Ausführungsform dient der Messumformer dem Betrieb von 2-Kanal-Absorptionssensoren. Die zweite Ausführungsform ist der ersten Ausführungsform sehr ähnlich. Die angeschlossene Lichtquelle stellt in diesem Fall aber Strahlung bei zwei verschiedenen Wellenlängen, insbesondere im ultravioletten Bereich, zur Verfügung, wobei die Strahlung im eingeschalteten Zustand für beide Wellenlängen weitgehend konstant ist. Der Messaufnehmer stellt über Fotodioden für beide Wellenlängen jeweils ein Fotostromsignal zur Verfügung.

Der Messumformer ist dementsprechend mit zwei Fotostromeingängen mit jeweils einem TIA und jeweils einem ADC ausgerüstet, die die digitalen Signale an einen gemeinsamen Mikrocontroller übertragen. Da die Fotodioden bei dieser Anordnung räumlich benachbart angeordnet und damit gleichen Störeinflüssen ausgesetzt sind, ist es nicht notwendig, die Fotostromkreise galvanisch voneinander zu trennen; beide TIA können an einem gemeinsame Bezugspotential betrieben werden und es können gemeinsame Versorgungsspannungen für beide TIA sowie für beide ADC verwendet werden.

Die beiden TIA sind in jeweils eigenen Schirmgehäusen angeordnet. Die Schirmelektroden und Schirmanschlüsse können für beide Fotostromkreise gemeinsam verwendet werden. Die auf dem digitalen Bus an die übergeordnete Steuerung übertragenen Daten werden gegenüber der ersten bevorzugten Ausführung erweitert, es können für beide Fotostromeingänge gemeinsam oder getrennt Startwerte auf Befehl über den Bus erfasst werden und es stehen für beide Eingänge sowohl rohe als auch mit dem Startwert verrechnete Daten, sowohl in stromproportionaler als auch in Absorptionseinheiten (logarithmische Skalierung) zur Verfügung. Darüber hinaus wird auch der einen dem Quotienten der beiden Ströme proportionaler Messwert sowie die Differenz der Absorptionswerte für beide Fotostromeingänge bereitgestellt. Das verwendete Gehäuse ist doppelt so breit wie für die erste bevorzugte Ausführungsform, ansonsten gelten die Ausführungen zu letzterer sinngemäß auch für die zweite Ausführungsform.

Aus den oben dargestellten Lösungsansätzen können weitere Konfigurationen bzw. weitere Ausführungsformen abgeleitet werden. In manchen Fällen ist die Integration des Messumformers zusammen mit dem Messwertaufnehmer (oder Teilen davon) in einem gemeinsamen Gehäuse vorteilhaft (Transmitter). In diesen Fällen, insbesondere für den Einsatz in der Biotechnologie ist es zumeist sinnvoll, das Gehäuse hermetisch dicht, leicht reinigbar und dampfsterilisierbar auszuführen.

Neben ein oder zwei Fotostromeingängen sind auch weitere Fotostromeingänge realisierbar, wobei diese in Abhängigkeit des Messaufnehmers entweder untereinander galvanisch getrennt oder auch in einer oder mehreren nicht getrennten Gruppen angeordnet werden können. Solche Anordnungen erlauben z.B. auch das Erfassen der eingestrahlten Intensität zu Normierungszwecken, wenn die Strahlungsquelle eine zeitlich zu stark veränderliche Intensität abgibt.

Zur Bereichsumschaltung eines TIA können neben den präferierten Reed-Relais bei reduzierten Anforderungen auch andere Formen elektromagnetischer Relais, auch mikromechanische eingesetzt werden. Sind die Anforderungen an die Schaltdynamik oder die Störströme geringer, z.B. weil die Lichtquelle zeitlich moduliert, insbesondere weitgehend abgeschaltet werden kann, kann der Einsatz von Halbleiterschaltern die bevorzugte Lösung sein. Langsam veränderliche Störgrößen können dann bei abgeschalteter Quelle beurteilt und korrigiert werden. Die Erkenntnisse hinsichtlich der Bereichsumschaltung und Einschwingverhalten gelten dann entsprechend auch für diesen Betriebszustand.

Die Anordnung der TIA in separaten Gehäusen stellt eine flexible, modulare Lösung dar. Werden Messeingänge nicht galvanisch voneinander getrennt kann aber auch die Unterbringung mehrerer TIA in einem Schirmgehäuse sinnvoll sein. Die Zahl der Messbereiche und die Messbereichsgrenzen können variiert werden. Bei mehreren ausgebildeten Messeingängen können sich diese in dieser Hinsicht auch unterscheiden. Hinsichtlich der Versorgung der Lichtquellen ist es ebenfalls möglich, auf diese zu verzichten oder diese mehrfach für die Versorgung und Überwachung mehrerer Quellen auszubilden. Die Verwendung des oben dargestellten digitalen Filters stellt, insbesondere unter ungünstigen EMV-Bedingungen oder bei zeitlich schnell veränderlichen Prozessbedingungen, eine gute Lösung dar. Sind die Anforderungen geringer können aber auch Filter mit geringerer Ordnung und geringerer Dämpfung bei den kritischen Störfrequenzen eingesetzt werden. Bei geringen Anforderungen kann auch eine ADC-Betriebsart gewählt werden, die eine höhere Latenz oder auch eine geringere Datenrate generiert.

In manchen Anwendungsfällen kann es sinnvoll sein, für schnelle oder für lokale Anwendungen neben einer digitalen Schnittstelle auch diskrete digitale Ein- und oder Ausgänge bereitzustellen, z.B. um die Erfassung von Startwerten oder das Erreichen von Grenzwerten zu signalisieren. Diese Ausgänge können dann auch vollständig oder teilweise von anderen Anschlüssen galvanisch getrennt ausgeführt werden. Der Messumformer kann aus den erfassten Fotoströmen auch weitere Messfunktionen generieren, z.B. ist die Verrechnung zu Messgrößen wie Transmission, Trübung in Trübungseinheiten (FTU, NTU, PPM), Farbeinheiten wie Hazen, oder ICUMSA möglich.

Bei hoher Auslastung des Mikrocontrollers (z.B. wg. Implementierung vieler Fotostromeingänge unter Verwendung aufwändiger digitaler Filter) kann es sinnvoll sein, mehrere Subsysteme der oben beschriebenen Erfindung aufzubauen, die jeweils mit eigenen Mikrocontrollern ausgestattet sind. Sinnvollerweise werden die Daten über digitale Anbindung in bekannter Technik (Serielle Übertragung über UART, SPI, IIC, CAN-Bus oder ähnlich, parallele digitale Busanbindung) zusammengeführt und der übergeordneten Steuerung zur Verfügung gestellt. Schraubklemmen können auch durch Federklemmen oder Stecksockel für die Aufnahme von Federklemmen oder Schraubklemmen oder durch Steckverbinder ersetzt werden. Die Kommunikation mit der übergeordneten Steuerung kann auch über alternative digitale Kommunikationssysteme erfolgen.

Als physischer Übertragungsweg bieten sich drahtgebundene Übertragungen (RS485, Ethernetartige Physik, APL, T1-L), aber auch optische Übertragung über Glasfaser oder Funkverbindungen (WiFi, Mobilfunk) an. Als Protokolle können z.B TCP/IP, Profinet, Ethernet IP, OPC UA, MQTT zum Einsatz kommen.

Wenn die Daten wie oben beschrieben mit vergleichsweise hoher Datenrate und geringer Latenz für den Mikrocontroller bereitstehen, bietet Dieses erweiterte Möglichkeiten der vorausschauenden Messwertbeurteilung und Bereichsumschaltung. Dem eigentlichen Filter für die Messwertgenerierung können weitere Filter und Algorithmen parallelgeschaltet werden, die z.B. mit niedrigerer Latenz den Signalverlauf im Hinblick auf die erste zeitliche Ableitung oder auch auf höhere zeitliche Ableitungen bewerten. Damit ist es dann möglich, bessere Entscheidungen hinsichtlich der Messbereichsumschaltung zu treffen sowie passgenaue Ersatzwerte für während der Einschwingphase beeinträchtigte Messwerte zu schätzen.

Die Verwendung eines FIR-Filters hoher Ordnung stellt bei den nach Stand der Technik verfügbaren Rechenleistungen eine gut beherrschbare Lösung dar. Ein Ersatz durch ähnlich wirkende IIR-Filter ist möglich. Mikrocontroller können im Sinne der Erfindung auch durch Mikroprozessoren mit externen Speichern oder Peripheriebausteinen und auch durch Controllerimplementierungen in FPGA ersetzt werden.

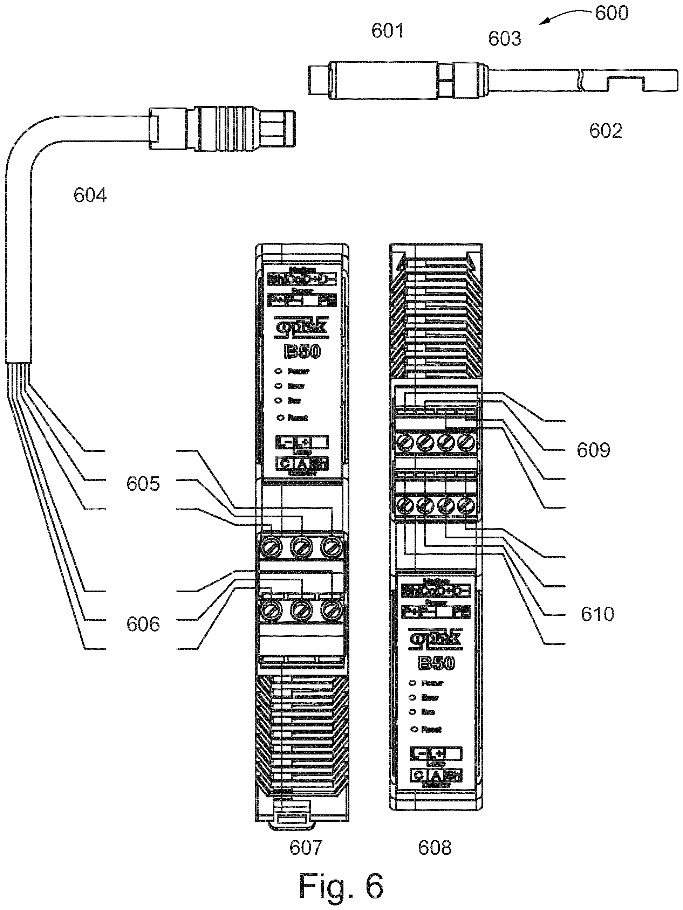

Fig. 6 zeigt schematische eine erfindungsgemäße Vorrichtung 600. Die Vorrichtung 600 weist einen Messwertaufnehmer 601 mit einem Messspalt 602 und einer Mediendichtung (O-Ring) 603 auf. Der Messwertaufnehmer 601 ist über ein Kabel 604 über Steckverbinder mit Anschlüssen 605 für die Versorgung und mit Anschlüssen 606 für den Fotostromeingang eines Messverstärkers 607 (Ansicht schräg von unten), 608 (Ansicht schräg von oben) verbunden. Der Messverstärker 607,608 weist Anschlüsse 609 für die Kommunikation mit einer Steuerung und Anschlüsse 610 für die Versorgung und die PE auf.

Die prinzipielle Funktionsweise einer solchen Vorrichtung ist dem Fachmann bekannt. Zu der besonderen Funktionsweise insbesondere des Messverstärkers 607,608 wird auf die obigen Ausführungen verwiesen.

Die zuvor beschriebenen Ausführungsformen dienen lediglich der Illustration der Erfindung und schränken den grundsätzlichen Erfindungsgedanken in keiner Form ein.

### Bezugszeichenliste

- 101: invertierender Eingang
- 103: Widerstand
- 102: Operationsverstärker
- 104,105: Widerstände
- 106,107: Reedrelais
- 108: Anschluss
- 109: nichtinvertierender Anschluss
- 110,111,112: Kapazitäten
- 113: Kondensator
- 114: Schutzdioden
- 115: Spannungsfolger
- 116,117: Ableitdioden
- 118,119: Widerstand
- 120: Fotodiode
- 121: Schirmstruktur
- 122: Spannungsteiler
- 123: ADC 123
- 124: Filter Versorgung
- 125: digitaler Bus
- 126: Mikrocontroller
- 201: Schirmgehäuse mit TIA
- 202: Deckel
- 203: Hauptleiterkarte
- 204: Modulleiterkarte
- 205: Klemmleisten
- a: Koeffizientenindex
- b: relative Koeffizientengröße
- 501: Halterung, Rastung
- 502: Frontplatte
- 600: Vorrichtung
- 601: Messwertaufnehmer
- 602: Messspalt
- 603: Mediendichtung (O-Ring)
- 604: Kabel mit Steckverbinder
- 605: Anschlüsse für Versorgung
- 606: Anschlüsse für Fotostromeingang
- 607: Messverstärker (Ansicht schräg von unten)
- 608: Messverstärker (Ansicht schräg von oben)
- 609: Anschlüsse für Kommunikation mit Steuerung
- 610: Anschlüsse für Versorgung und PE

## Patentansprüche

1. Vorrichtung (600) zur optischen Bestimmung einer Stoffkonzentration eines Fluids, aufweisend einen Messverstärker (607,608) zur Verstärkung von gemessenen Fotoströmen, **dadurch gekennzeichnet, dass** der Messverstärker (607,608) mindestens einen linearen Transimpedanzverstärker (102,103) zur Erfassung und Verstärkung der Fotoströme aufweist.

2. Vorrichtung nach Anspruch 1, wobei der Messverstärker (607,608) zur kontinuierlichen Erfassung und Bereitstellung der Fotoströme für eine übergeordnete Steuerung konfiguriert ist.

3. Vorrichtung nach mindestens einem der vorhergehenden Ansprüche, wobei eine Latenz des Messverstärkers (607,608) < 500 ms ist.

4. Vorrichtung nach mindestens einem der vorhergehenden Ansprüche, wobei ein Messbereich des Messverstärkers (607,608) < 4 Dekaden beträgt.

5. Vorrichtung nach mindestens einem der vorhergehenden Ansprüche, wobei der Messverstärker (607,608) eine Messbereichsumschaltung aufweist.

6. Vorrichtung nach Anspruch 5, wobei die Messbereichsumschaltung ein Reedrelais (106,107) aufweist.

7. Vorrichtung nach mindestens einem der vorhergehenden Ansprüche, wobei der Messverstärker (607,608) einen Eingangsschutz durch Dioden aufweist, die auf ein Eingangspotential des Messverstärkers (607,608) angebunden sind.

8. Vorrichtung nach mindestens einem der vorhergehenden Ansprüche, aufweisend ein metallisches Gehäuse mit einer niederohmigen Anbindung an einen Referenzeingang des Messverstärkers (607,608).

9. Vorrichtung nach mindestens einem der vorhergehenden Ansprüche, aufweisend eine galvanische Trennung eines Fotostromeingangs des Messverstärkers (607,608) von einer Versorgungseinheit und / oder einer Kommunikationseinheit.

10. Vorrichtung nach mindestens einem der vorhergehenden Ansprüche, wobei der Messverstärker (607,608) eine Dämpfung für Störungen von 50/60 Hz > 100 dB aufweist.

11. Vorrichtung nach mindestens einem der vorhergehenden Ansprüche, konfiguriert zur Erfassung unmodulierter Strahlung.

12. Verfahren zur optischen Bestimmung einer Stoffkonzentration eines Fluids, insbesondere mit einer Vorrichtung nach mindestens einem der vorhergehenden Ansprüche, wobei ein Messverstärker (607,608) gemessene Fotoströme verstärkt, **dadurch gekennzeichnet, dass** der Messverstärker (607,608) mindestens einen linearen Transimpedanzverstärker zur Erfassung und Verstärkung der Fotoströme aufweist.
